# EUROPEAN PATENT APPLICATION

(11) **EP 4 411 932 A1**
(43) Date of publication of application: **07.08.2024**
(21) Application number: 23207079.7
(22) Date of filing: 31.10.2023
(51) Int. Cl.: H01M 10/0587, H01M 50/107, H01M 50/538, H01M 10/04

(54) **CYLINDRICAL BATTERIES, AND METHODS AND DEVICES FOR PROCESSING THE SAME**

(30) Priority: 06.02.2023 CN 202310088555; 06.02.2023 CN 202320165745 U; 20.02.2023 WO PCT/CN2023/077071
(71) Applicant: Eve Energy Co., Ltd., Huizhou, Guangdong 516006 (CN)
(72) Inventor: WANG, Guoqian, Huizhou,Guangdong (CN); LIU, Shengqi, Huizhou,Guangdong (CN); SONG, Pengyuan, Huizhou,Guangdong (CN)
(74) Representative: Murgitroyd & Company

(57) **Abstract**

The present disclosure provides a cylindrical battery, and methods and devices for processing the same. The cylindrical battery includes a core (10). The core (10) includes one or more electrode sheets (11). A tab (12) is provided at an end of each of the electrode sheets (11). The tab is spaced apart from each of a winding start (101) and a winding end (102) of each of the electrode sheets (11).

## Description

### TECHNICAL FIELD

The present disclosure relates to battery technologies, for example, to cylindrical batteries, and methods and devices for processing the same.

### BACKGROUND

A cylindrical battery includes a core that is formed by winding an electrode sheet. A part of blank foil is reserved at one end of the electrode sheet as a positive tab or a negative tab. When the core is put into a battery case, the tabs are easy to turn outward to scratch the battery case, resulting in metal shavings. The metal shavings may easily damage the electrode sheet or a separator, resulting in a short circuit within the battery.

Therefore, there is an urgent need to provide a cylindrical battery to solve the above technical problems.

### TECHNICAL PROBLEM

Some embodiments of the present disclosure provide cylindrical batteries, and methods and devices for processing the same to solve a technical problem that a battery case is scratched due to tabs turns out when a core is putted into the case.

### TECHNICAL SOLUTIONS

For this purpose, the present disclosure adopts the following technical solutions.
in a first aspect, some embodiments of the present disclosure provide a cylindrical battery, the cylindrical battery includes:
a core, wherein the core comprises one or more electrode sheets, a tab is provided at an end of each of the electrode sheets, and the tab is spaced apart from each of a winding start and a winding end of the each of the electrode sheets.

In a second aspect, some embodiments of the present disclosure provide a method for processing a cylindrical battery, including:
providing a coated positive electrode sheet and a coated negative electrode sheet;
die-cutting an end of the coated positive electrode sheet to form a first tab, and die-cutting an end of the coated negative electrode sheet to form a second tab, so that the first tab is spaced apart from each of a winding start and a winding end of the coated positive electrode sheet and comprises a plurality of separately arranged first sub-tabs, and the second tab is spaced apart from each of a winding start and a winding end of the coated negative electrode sheet and comprises a plurality of separately arranged second sub-tabs;
stacking the coated positive electrode sheet with the first tab, a separator, and the coated negative electrode sheet with the second tab in sequence to form a stack, and winding the stack to form a core, so that the first tab and the second tab are located respectively at opposite ends of the core;
flattening each of the first sub-tabs and the second sub-tabs respectively at the opposite ends of the core to a preset angle; and
welding the first sub-tabs to a first current collecting plate and welding the second sub-tabs to a second current collecting plate.

In a third aspect, some embodiments of the present disclosure provide a device for processing a cylindrical battery, wherein the cylindrical battery including a core, and the core includes one or more electrode sheets, a tab is provided at an end of each of the electrode sheets, and the tab is spaced apart from each of a winding start and a winding end of the each of the electrode sheets, and the device includes:
a positioning clamp assembly comprising an upper clamp and a lower clamp, wherein the upper clamp and the lower clamp are fitted together, so that a core fixing part for fixing the core is formed in a middle area of the positioning clamp assembly; and
a flattening tool comprising a tab forming part, wherein the tab forming part is configured to accommodate the tab and has a conical surface for bending the tab toward a central axis of the core.

### BENEFICIAL EFFECTS

Beneficial effects of embodiments of the present application: the present disclosure provides cylindrical batteries, and methods and devices for processing the same. The cylindrical batteries include a core, wherein the core includes one or more electrode sheets, a tab is provided at an end of each of the electrode sheets, and the tab is spaced apart from each of a winding start and a winding end of the each of the electrode sheets. In the present disclosure, the tab is separated from the winding start of an electrode sheet by a certain distance, and the tab is separated from the winding end of the electrode sheet by a certain distance, so that after the electrode sheet is wound into the core, a diameter of an outermost ring of the tab is smaller than a diameter of an outermost ring at other positions of the core, which solves a technical problem that a battery case is scratched due to the tab turns out when the core is putted into the case.

### BRIEF DESCRIPTION OF THE DRAWINGS

FIG. 1 is a schematic diagram of a core of a cylindrical battery in an unfolded state according to some embodiments of the present disclosure.
FIG. 2 is a schematic structural diagram of a core of the cylindrical battery according to some embodiments of the present disclosure.
FIG. 3 is a schematic structural diagram of the cylindrical battery according to some embodiments of the present disclosure.
FIG. 4 is a schematic diagram of formation of a core of the cylindrical battery by winding according to some embodiments of the present disclosure.
FIG. 5 is a schematic diagram of a core of another cylindrical battery in an unfolded state according to some embodiments of the present disclosure.
FIG. 6 is a schematic structural diagram of a core of the another cylindrical battery according to some embodiments of the present disclosure.
FIG. 7 is a schematic structural diagram of a positioning clamp assembly according to some embodiments of the present disclosure.
FIG. 8 is a schematic structural diagram of a flattening tool according to some embodiments of the present disclosure.

### List of reference signs:

Core 10, electrode sheet 11, tab 12, material area 13, winding start 101, winding end 102, current collecting plate 20, welding part 21, welding point 211, end cap 22, core hole 14 , welding through hole 221, sub-tab 120, central axis 103, blank foil 113, first electrode sheet 111, first tab 121, second electrode sheet 112, second tab 122, separator 15, positioning clamp assembly 30, upper clamp 31 , lower clamp 32, core fixing part 33, flattening tool 40, tab forming part 41, conical surface 411, and connector 50.

### DETAILED DESCRIPTION OF THE PREFERRED EMBODIMENTS

In this disclosure, unless stated to the contrary, orientation words such as "up" and "down" as used herein usually refer to up and down in an actual use or working state of a device, specifically a direction in the drawings, while "inside" and "outside" are defined relative to an outline of the device.

A cylindrical battery includes a core that is formed by winding an electrode sheet. A part of blank foil is reserved at one end of the electrode sheet as a positive tab or a negative tab. When the core is put into a battery case, the tabs are easy to turn outward to scratch the battery case, resulting in metal shavings. The metal shavings may easily damage the electrode sheet or a separator, resulting in a short circuit within the battery. Therefore, there is an urgent need to provide a cylindrical battery to solve the above technical problems. The present disclosure proposes the following technical solutions aiming at the above technical problems.

Some embodiments of the present disclosure provide a cylindrical battery. The cylindrical battery includes a core 10. The core 10 comprises one or more electrode sheets 11. One end of an electrode sheet 11 of the electrode sheets 11 is provided with a tab 12. The tab 12 is spaced apart from a winding start 101 of the electrode sheet 11, and the tab 12 is spaced apart from a winding end 102 of the electrode sheet 11.

In the present disclosure, the tab 12 is separated from the winding start of the electrode sheet 11 by a certain distance, and is separated from the winding end of the electrode sheet 11 by a certain distance, so that after the electrode sheet 11 is wound into the core 10, a diameter of an outermost ring of the tab 12 is smaller than a diameter of an outermost ring at other positions of the core 10, so as to solve the technical problem that a battery case is scratched due to the tab 12 turns out when the core 10 is putted into the case.

The present disclosure will be described below in connection with specific embodiments.

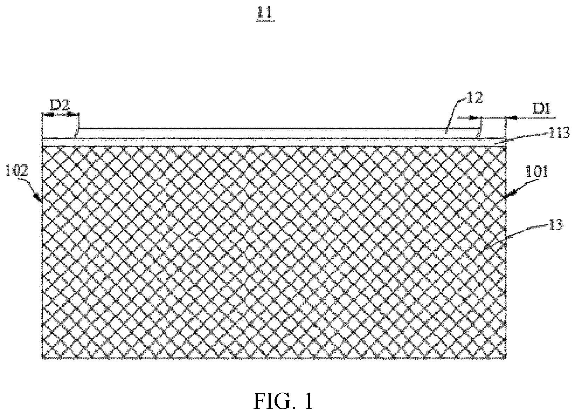

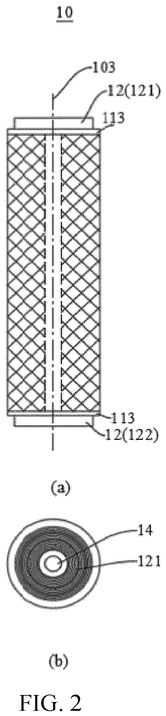

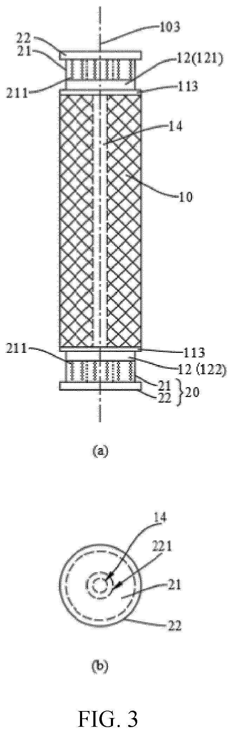

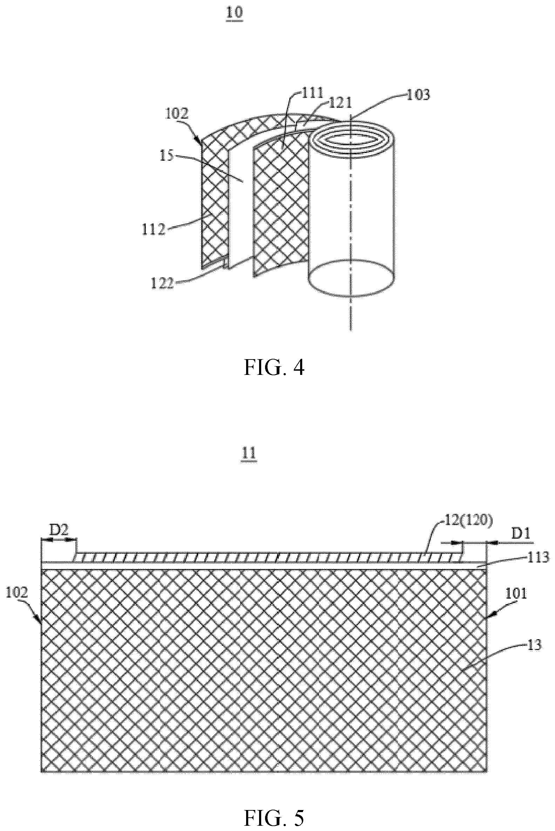

Please refer to FIG. 1 to FIG. 4. FIG. 1 is a schematic diagram of a core 10 of a cylindrical battery in an unfolded state according to some embodiments of the present disclosure. FIG. 2 is a schematic structural diagram of the core 10 of the cylindrical battery according to some embodiments of the present disclosure. In FIG. 2, (a) is a front view of a structure of the core 10 of the cylindrical battery, and (b) is a top view of the structure of the core 10 of the cylindrical battery. FIG. 3 is a schematic structural diagram of the cylindrical battery according to some embodiments of the present disclosure. FIG. 4 is a schematic diagram of formation of the core 10 of the cylindrical battery by winding according to some embodiments of the present disclosure.

In some embodiments, the cylindrical battery includes the core 10 wound into a cylindrical shape by the electrode sheet 11. As shown in FIG. 1, the electrode sheet 11 includes a material area 13 and a tab 12. The electrode sheet 11 may be a metal foil, such as an aluminum foil or a copper foil. The material area 13 is formed by coating slurry on the metal foil. The tab 12 is formed by leaving a blank (that is, no slurry is coated) at an end of the material area 13. The tab 12 is spaced apart from a winding start 101 of the electrode sheet 11, and the tab 12 is spaced apart from a winding end 102 of the electrode sheet 11. For example, a distance D1 between the tab 12 and the winding start 101 of the electrode sheet 11 may be 5 millimetres (mm) to 300 mm, and a distance D2 between the tab 12 and the winding end 102 of the electrode sheet 11 may be 5 mm to 300 mm. It should be noted that lengths of D1 and D2 may be adjusted according to requirements, which is not limited in the present disclosure.

In some embodiments, a length of the tab 12 along an axial direction of the core 10 may be 3 mm to 15 mm, but is not limited thereto.

As shown in FIG. 2, since the tab 12 is spaced from the winding start 101 of the electrode sheet 11 by a certain distance, after the core 10 is wound and formed, there will be no tab 12 in the spacing area between the tab 12 and the winding start 101, which will not block a core hole 14 of the core 10. This is conducive to subsequent injection of electrolyte, and avoids affecting subsequent welding of a negative electrode tab and a battery case of the cylindrical battery.

As shown in FIG. 2, since the tab 12 is spaced from the winding end 102 of the electrode sheet 11 by a certain distance, after the core 10 is wound and formed, there is no tab 12 in the spacing area between the tab 12 and the winding end 102, so that a diameter of an outermost circumference of the tab 12 is smaller than a diameter of an outermost circumference of the material area 13. Since the diameter of the tab 12 is smaller, a problem that the tab 12 is turned outward and scratches the battery case may be solved when the core 10 is put into the case.

In some embodiments, as shown in FIG. 3, the cylindrical battery further includes a current collecting plate 20. The current collecting plate 20 includes an end cap 22 and a welding part 21 that are connected. An end of the welding part 21 away from the end cap 22 is in contact with the tab 12, and an outer sidewall of the welding part 21 is welded to a peripheral sidewall of the tab 12. The tab 12 does not need to be flattened. Instead, an end face of the tab 12 is directly connected to an end face of the welding part 21, and then the tab 12 and the welding part 21 are welded from side walls. This avoids metal scraps caused by a flattening process of the tab 12 from falling into inside of the core 10 which short-circuits the battery, avoids scalding the electrode sheet 11 and a separator 15 when the current collecting plate 20 is welded through, and further simplifies a process, reduces production cost, and improves a production efficiency and a qualification rate of the battery.

The end cap 22 is a circular flat plate. The welding part 21 may be a cylinder and disposed in a middle area of the end cap 22. A diameter of the end cap 22 is smaller than or equal to a maximum diameter of the core 10, so that the core 10 is easier to enter the case. For example, the diameter of the end cap 22 may be 0 mm to 5 mm smaller than the maximum diameter of the core 10.

The current collecting plate 20 is provided with a welding through hole 221 penetrating through a middle area of the end cap 22 and the welding part 21. A core hole 14 is provided at a winding centre of the core 10, and a diameter of the welding through hole 221 is greater than or equal to a diameter of the core hole 14, which eases welding of the tab 12 and the welding part 21.

In some embodiments, as shown in FIG. 3, a peripheral sidewall of the welding part 21 is welded to the peripheral sidewall of the tab 12. One or more welding points 211 may be distributed on the peripheral sidewall of the welding part 21. A welding track may be vertical, horizontal, oblique spot welding or line welding. A welding method may be one or more of ultrasonic welding, resistance welding, laser welding, etc., which is not limited in this disclosure.

In some embodiments, a blank foil 113 is provided between the tab 12 and the material area 13. A length of the blank foil 113 in a winding direction is equal to a length of the material area 13 in the winding direction. A length of the tab 12 in the winding direction is smaller than the length of the blank foil 113 in the winding direction. By setting a section of the blank foil 113 between the tab 12 and the material area 13, it may prevent welding through or scalding the material area 13 and further damaging the electrode sheet 11 when the current collecting plate 20 is welded. A length of the blank foil 113 extending along an axial direction of the core 10 may be 1.5 mm to 8 mm, but is not limited thereto.

In some embodiments, referring to FIG. 4, the cylindrical battery includes a first electrode sheet 111, the separator 15, and a second electrode sheet 112 that are stacked. The separator 15 is located between the first electrode sheet 111 and the second electrode sheet 112. One end of the first electrode sheet 111 is provided with a first tab 121. One end of the second electrode sheet 112 is provided with a second tab 122. The first electrode sheet 111, the separator 15, the second electrode sheet 112 are stacked and wound to form the core 10. The first tab 121 and the second tab 122 are respectively located at opposite ends of the core 10. The first tab 121 and the second tab 122 serve as a positive tab and a negative tab of the cylindrical battery, respectively.

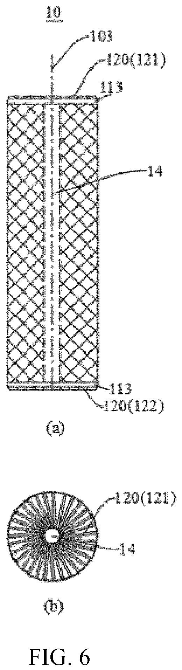

Please refer to FIG. 5 and FIG. 6. FIG. 5 is a schematic diagram of a core 10 of a cylindrical battery in an unfolded state according to some embodiments of the present disclosure. FIG. 6 is a schematic structural diagram of the core 10 of the another cylindrical battery according to some embodiments of the present disclosure. The setting of one or more tabs 12 of the cylindrical battery as shown in FIG. 5-6 is different from that of the cylindrical battery as shown in FIG. 1-4. The tabs 12 of the cylindrical battery as shown in FIG. 1-4 are in an all-tab configuration, while the tabs 12 of the cylindrical battery as shown in FIG. 5-6 are in a multiple-tab configuration.

In some embodiments, as shown in FIG. 5, the core 10 includes an electrode sheet 11. An end of the electrode sheet 11 is provided with a tab 12. The tab 12 is spaced apart from a winding start 101 of the electrode sheet 11, and the tab 12 is spaced apart from a winding end 102 of the electrode sheet 11. There is a certain distance D1 between the tab 12 and the winding start 101 of the electrode sheet 11 and a certain distance D2 between the tab 12 and the winding end 102 of the electrode sheet 11. Regarding the setting of D1 and D2, please refer to the setting in the cylindrical battery as shown in FIG. 1-4, which will not be repeated here.

The tab 12 includes a plurality of separately arranged sub-tabs 120. A shape of each of the sub-tabs 120 may be parallelogram, trapezoid, etc., but not limited thereto. A circumferential length of the sub-tabs 120 in a winding direction of the electrode sheet 11 is 1 mm to 5 mm. A distance between a side of the sub-tabs 120 away from a material area 13 and a side of the sub-tabs 120 close to the material area 13 is 1.5 mm to 5 mm. In some embodiments, one of the sub-tabs 120 may be a quadrilateral shape, and an acute angle between two adjacent sides of a sub-tab 120 may be 30° to 80°. A number of the sub-tabs 120 may be adjusted according to a length of the electrode sheet 11.

As shown in FIG. 6, each of the sub-tabs 120 are bent toward a central axis 103 of the core 10, and a plane of the sub-tabs 120 near the central axis 103 of the core 10 is close to an end surface of the core 10. Respective orthographic projections of every two adjacent ones of the sub-tabs 120 on a plane perpendicular to the central axis 103 of the core 10 overlap at least partially each other. By bending the sub-tabs 120, an axial length of the cylindrical battery may be reduced.

In some embodiments, a core hole 14 is provided at a winding centre of the core 10, and respective orthographic projections of the sub-tabs 120 on the plane perpendicular to the central axis 103 of the core 10 are located at a periphery of the winding centre of the core 10. That is, the formed sub-tabs 120 will not block the core hole 14 of the core 10.

In some embodiments, the cylindrical battery further includes a current collecting plate 20, an end surface of the current collecting plate 20 facing the sub-tabs 120 is welded to the sub-tabs 120. A diameter of the current collecting plate 20 is smaller than or equal to a maximum diameter of the core 10.

In some embodiments, a blank foil 113 is provided between the tab 12 and the material area 13. A length of the blank foil 113 in a winding direction is equal to a length of the material area 13 in the winding direction. By setting a section of the blank foil 113 between the tab 12 and the material area 13, it may prevent welding through or scalding the material area 13 and further damaging the electrode sheet 11 when the current collecting plate 20 is welded, and further avoids a flattening tool 40 from pressing and damaging the material area when the flattening tool 40 is used to flatten the tab 12. A length of the blank foil 113 extending along an axial direction of the core 10 may be 1.5 mm to 8 mm, but is not limited thereto.

In some embodiments, the cylindrical battery includes a first electrode sheet 111, a second electrode sheet 112, and a separator 15. One end of the first electrode sheet 111 is provided with a first tab 121, and the first tab 121 includes a plurality of sub-tabs 120. One end of the second electrode sheet 112 is provided with a second tab 122, and the second tab 122 includes a plurality of sub-tabs 120. The separator 15 is located between the first electrode sheet 111 and the second electrode sheet 112. The first electrode sheet 111, the separator 15, the second electrode sheet 112 are stacked and wound to form the core 10. The first tab 121 and the second tab 122 are respectively located at two ends of the core 10.

The present disclosure also provides a method for processing a cylindrical battery, which is configured to process a cylindrical battery (e.g., a cylindrical battery as shown in FIG. 5- FIG. 6) as described elsewhere in the present disclosure. The electrode sheet 11 of the cylindrical battery includes a positive electrode sheet and a negative electrode sheet. The processing method may include the following operations.

In operation S10, a coated positive electrode sheet and a coated negative electrode sheet are provided.

In operation S20, an end of the coated positive electrode sheet is die-cut to form a first tab, and an end of the coated negative electrode sheet is die-cut to form a second tab. The first tab is spaced apart from each of a winding start and a winding end of the coated positive electrode sheet and includes a plurality of separately arranged first sub-tabs. The second tab is spaced apart from each of a winding start and a winding end of the coated negative electrode sheet and includes a plurality of separately arranged second sub-tabs.

In the operation S20, die cutting on the electrode sheet(s) 12 (e.g., the coated positive electrode sheet or the coated negative electrode sheet) to form the tabs 12 (e.g., the first tab or the second tab) and the plurality of sub-tabs 120 (e.g., the first sub-tabs or the second sub-tabs) may be realized through die cutting in one process or may be realized step by step. If the die cutting on the electrode sheet(s)12 is carried out step by step, there is no limit to a sequence of the die cutting.

The positive electrode sheet may be an aluminum foil, and the negative electrode sheet may be a copper foil, but not limited thereto.

In operation S30, the coated positive electrode sheet with the first tab, the separator 15, and the coated negative electrode sheet with the second tab are stacked in sequence to form a stack, and the stack is wound to form a core 10, so that the first tab and the second tab are located respectively at opposite ends of the core 10.

In operation S40, each of the first sub-tabs and the second sub-tabs respectively at the opposite ends of the core 10 are flattened to a preset angle.

In the operation S40, a middle area of the core 10 is fixed and the first sub-tabs and the second sub-tabs respectively at the opposite ends of the core 10 are exposed. The first sub-tabs and the second sub-tabs are flattened by using a flattening tool 40. Specifically, first sub-tabs and the second sub-tabs may be pre-flattened twice or more times by using the flattening tool 40, and then final and complete flattening may be performed. The preset angle may be set as required, for example, a surface of the flattened sub-tabs 120 may be perpendicular to a central axis 103 of the core 10. The preset angle may also be other angles, which are not limited here. The flattening tool 40 may be controlled by means of pneumatic transmission, so that the prepressing is more accurate. The final flattening of the tabs 12 may be driven by servo motor. The pre-flattening of the tabs 12 will not cause relatively large frictional force on the tabs 12, avoiding damage to the tabs 12, thereby avoiding metal shavings falling into the core 10 to short-circuit the core 10. At the same time, the pre-flattened tabs 12 of the core 10 has better flatness, which avoids a short circuit caused by damage to the core 10 when the tabs 12 are welded to the current collecting plate 20 (e.g., a first current collecting plate and a second current collecting plate as described below), improves flatness of the formed tabs 12 of the core 10, and improves cylindrical battery yield and reduces production cost.

In operation S50, the first sub-tabs and the first current collecting plate are welded, and the second sub-tabs and the second current collecting plate are welded.

In the operation S50, after one of the first sub-tabs are flattened, an end surface of the one of the first sub-tabs is welded to an end surface of the first current collecting plate; and after one of the second sub-tabs are flattened, an end surface of the one of the second sub-tabs is welded to an end surface of the second current collecting plate.

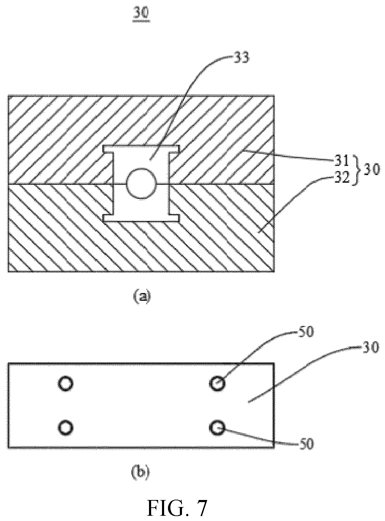

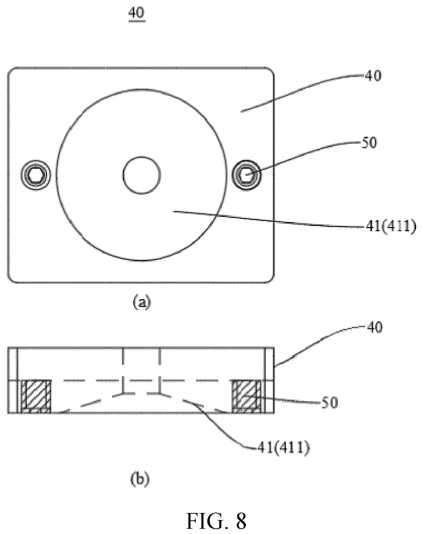

The present disclosure further provides a device for processing a cylindrical battery configured to process a cylindrical battery (e.g., a cylindrical battery as shown in FIG. 5- FIG. 6) as described elsewhere in the present disclosure. The processing device includes a positioning clamp assembly 30 and a flattening tool 40. Please refer to FIG. 7 to FIG. 8, FIG. 7 is a schematic structural diagram of the positioning clamp assembly 30 according to some embodiments of the present disclosure. In FIG. 7, (a) is a top view of a structure of the positioning clamp assembly 30, and (b) is a front view of the structure of the positioning clamp assembly 30. FIG. 8 is a schematic structural diagram of a flattening tool 40 according to some embodiments of the present disclosure. In FIG. 8, (a) is a top view of a structure of the flattening tool 40, and (b) is a front view of a structure of the flattening tool 40.

Please refer to FIG. 7, the positioning clamp assembly 30 includes an upper clamp 31 and a lower clamp 32. The upper clamp 31 and the lower clamp 32 are fitted together. The upper clamp 31 and the lower clamp 32 may be fixedly connected via a connector 50. The connector 50 may be a bolt or the like. A middle area of the positioning clamp assembly 30 is provided with a core fixing part 33. The core fixing part 33 is configured to fix a core 10 of the cylindrical battery. The core fixing part 33 includes a first fixing part arranged in the upper clamp 31 and a second fixing part arranged in the lower clamp 32. The first fixing part and the second fixing part are fitted together. Surfaces of the first fixing part and the second fixing part that are close to each other are recessed to form a cylindrical cavity for accommodating the core 10. Hardness of a material of the core fixing portion 33 is smaller than that of other parts of the positioning clamp assembly 30, to prevent the core 10 from being damaged by the material of the core fixing portion 33 with great hardness.

A length of the positioning clamp assembly 30 is smaller than a length of the core 10. After the core 10 is placed in the core fixing part 33, tabs 12 at two ends of the core 10 are exposed from two sides of the positioning clamp assembly 30, so that the tabs 12 may be flattened by the flattening tool 40.

Please refer to FIG. 8, the flattening tool 40 includes a tab forming part 41 configured to accommodate the tabs 12 of the cylindrical battery, and the tab forming part 41 has a conical surface 411. The conical surface 411 may bend the tabs 12 of the cylindrical battery toward the central axis 103 of the core 10 of the cylindrical battery. An angle of the conical surface 411 may be adjusted according to the preset angle for flattening the tabs 12. A diameter of the tab forming part 41 is larger than an outermost diameter of the tabs 12, so that the tabs 12 of the entire core 10 may be accommodated. A middle area of the tab forming part 41 is provided with a through hole, so that when the tab forming part 41 pre-flattens the tabs 12, gas may be discharged from the through hole.

The tab forming part 41 may be connected to the flattening tool 40 via the connector 50, and the tab forming part 41 is detachable. Thus, different tab forming parts 41 may be matched and connected according to a model of the cylindrical battery to improve compatibility of the flattening tool 40.

There may be a pair of tabs forming parts 41 to flatten the tabs 12 at the two ends of the core 10 simultaneously. There may also be multiple pairs of tabs forming parts 41, to simultaneously flatten the tabs 12 of multiple cores 10 to improve production efficiency, which is not limited in the present disclosure.
The processing device further includes a pneumatic transmission unit, a servo motor, a control unit, etc., so that the flattening tool 40 may be driven to move along a preset direction to flatten the tabs 12 of the cylindrical battery.

## Claims

1. A cylindrical battery, comprising a core (10), wherein the core (10) comprises one or more electrode sheets (11), a tab (12) is provided at an end of each of the electrode sheets (11), and the tab (12) is spaced apart from each of a winding start (101) and a winding end (102) of the each of the electrode sheets (11).

2. The cylindrical battery according to claim 1, further comprising a current collecting plate (20), the current collecting plate (20) comprising an end cap (22) and a welding part (21) connected to the end cap (22),
wherein an end of the welding part (21) away from the end cap (22) is in contact with the tab (12), and an outer sidewall of the welding part (21) is welded to a peripheral sidewall of the tab (12); and
wherein a diameter of the end cap (22) is smaller than or equal to a maximum diameter of the core (10).

3. The cylindrical battery according to claim 2, wherein a core hole (14) is provided at a winding centre of the core (10), and an end surface of the end cap (22) is provided with a welding through hole (221); and
wherein a diameter of the welding through hole (221) is greater than or equal to a diameter of the core hole (14).

4. The cylindrical battery according to claim 1, wherein the tab (12) comprises a plurality of separately arranged sub-tabs (120) each bent towards a central axis (103) of the core (10), and respective orthographic projections of every two adjacent ones of the sub-tabs (120) on a plane perpendicular to the central axis (103) of the core (10) overlap at least partially each other.

5. The cylindrical battery according to claim 4, wherein a core hole (14) is provided at a winding centre of the core (10), and respective orthographic projections of the sub-tabs (120) on the plane perpendicular to the central axis (103) of the core (10) are located at a periphery of the core hole (14).

6. The cylindrical battery according to claim 4, wherein a shape of each of the sub-tabs (120) is one of parallelogram and trapezoid.

7. The cylindrical battery according to claim 6, wherein an acute angle between two adjacent sides of each of the sub-tabs (120) is of 30 ° to 80 °.

8. The cylindrical battery according to claim 4, further comprising a current collecting plate (20), wherein an end surface of the current collecting plate (20) facing the sub-tabs (120) is welded to the sub-tabs (120), and a diameter of the current collecting plate (20) is smaller than or equal to a maximum diameter of the core (10).

9. The cylindrical battery according to any one of claims 1-8, wherein a circumferential distance between the tab (12) and the winding start (101) is of 5 mm to 300 mm, and a circumferential distance between the tab (12) and the winding end (102) is of 5 mm to 300 mm.

10. The cylindrical battery according to any one of claims 1-8, wherein the each of the electrode sheets (11) further comprises a material area (13), the tab (12) is located at an end of the material area (13), and two side ends of the material area are respectively as the winding start (101) and the winding end (102).

11. The cylindrical battery according to claim 10, wherein a blank foil (113) is provided between the tab (12) and the material area (13), and a length of the blank foil (113) in a winding direction is equal to a length of the material area (13) in the winding direction.

12. The cylindrical battery according to claim 11, wherein the electrode sheets (11) comprise a metal foil, and the material area (13) is formed by coating a slurry on a part of the metal foil.

13. The cylindrical battery according to any one of claims 1-8, wherein the one or more electrode sheets (11) comprise two electrode sheets, and the core (10) further comprises a separator (15) between the two electrode sheets (11) and is formed by stacking and winding the separator (15) and the two electrode sheets; and
the tab (12) of one of the two electrode sheets (11) and the tab (12) of an other one of the two electrode sheets (11) are located respectively at opposite ends of the core (10).

14. A method for processing a cylindrical battery comprising:
providing a coated positive electrode sheet and a coated negative electrode sheet;
die-cutting an end of the coated positive electrode sheet to form a first tab, and die-cutting an end of the coated negative electrode sheet to form a second tab, so that the first tab is spaced apart from each of a winding start and a winding end of the coated positive electrode sheet and comprises a plurality of separately arranged first sub-tabs, and the second tab is spaced apart from each of a winding start and a winding end of the coated negative electrode sheet and comprises a plurality of separately arranged second sub-tabs;
stacking the coated positive electrode sheet with the first tab, a separator (15), and the coated negative electrode sheet with the second tab in sequence to form a stack, and winding the stack to form a core (10), so that the first tab and the second tab are located respectively at opposite ends of the core;
flattening each of the first sub-tabs and the second sub-tabs respectively at the opposite ends of the core (10) to a preset angle; and
welding the first sub-tabs to a first current collecting plate and welding the second sub-tabs to a second current collecting plate.

15. A device for processing a cylindrical battery, wherein the cylindrical battery comprises a core, and the core comprises one or more electrode sheets, a tab is provided at an end of each of the electrode sheets, and the tab is spaced apart from each of a winding start and a winding end of the each of the electrode sheets,
the device comprising:
a positioning clamp assembly (30) comprising an upper clamp (31) and a lower clamp (32), wherein the upper clamp (31) and the lower clamp (32) are fitted together, so that a core fixing part (33) for fixing the core (10) is formed in a middle area of the positioning clamp assembly (30); and
a flattening tool (40) comprising a tab forming part (41), wherein the tab forming part (41) is configured to accommodate the tab (12) and has a conical surface (411) for bending the tab (12) toward a central axis (103) of the core (10).
